# EUROPEAN PATENT SPECIFICATION

(11) **EP 0 428 217 B1**
(45) Date of publication and mention of the grant of the patent: **16.02.1994**
(21) Application number: 90202960.2
(22) Date of filing: 09.11.1990
(51) Int. Cl.: A21C 15/04, B26D 3/16

(54) **Cutting apparatus**
Vorrichtung zum Schneiden
Appareil de découpage

(30) Priority: 16.11.1989 GB 8925942
(43) Date of publication of application: 22.05.1991
(73) Proprietor: UNILEVER N.V., 3013 AL Rotterdam (NL); UNILEVER PLC, London EC4P 4BQ (GB)
(72) Inventor: Haydock, David, Sharnbrook, Bedford MK44 1LQ (GB); Silvestri, Carlo, I-81100 Caserta (IT)
(74) Representative: Ford, Michael Frederick

(56) References cited:
- EP-A- 0 090 933
- DE-A- 1 228 908
- US-A- 3 427 909
- US-A- 3 759 128
- US-A- 4 237 763
- US-A- 4 589 318

## Description

This invention relates to an apparatus suitable for cutting log-shaped structures, in particular soft, deformable log-shaped structures, and methods for doing the same. Such methods and apparatus are particularly useful in the industrial preparation of foodstuffs where there is a need to slice soft, deformable cylindrical products.

In the past, systems have existed for the slicing of fairly hard or non-delicate foodstuffs, for example that disclosed in US 3,759,128 (Dewhurst). This system comprised a hopper into which foodstuffs such as boneless meat could be loaded. Located at the bottom of the hopper is a roller with projections on its outer surface. Meat could then be engaged by the projections on the roller when the roller turns, and the engaged meat is subsequently drawn across and through a series of reciprocating blades, thereby producing slices of meat.

However, this system is not applicable where the product to be sliced is very delicate, soft, deformable in nature, and it is desired to produce undeformed slices of the product.

It is therefore an object of the invention to be able to cut well formed slices from very delicate, soft and deformable generally cylindrical material, for example a soft deformable log shape of food material.

It is a further object of the invention to provide an energy efficient method and apparatus for producing slices from a log-shaped structure.

Further benefits of the invention will become apparent to one skilled in the art.

Thus, the starting point of the invention comprises an apparatus for slicing a log-shaped structure having a centre line, the apparatus comprising means for causing the structure to rotate about its centre-line, a series of cutting means having their cutting edges transverse to the centre line of the rotating structure, and means for causing relative movement between the structure and the cutting means whereby the cutting means cuts into the structure being rotated, and the means for causing rotation define a generally concave curved supporting surface as known from EP-A-0,090,933 (ENGEL).

According to one embodiment of the invention, an apparatus for slicing a cylindrical structure comprises a pair of rollers on which the log shape structure can be supported and rotated about its centre line or longitudinal axis, and a series of cutting means, preferably reciprocating, the direction of the cutting means being substantially perpendicular to the axis of rotation of the structure. The cutting means are positioned such that they can cut into the structure at least as far as the axis of rotation of the structure by relative movement caused between the cutting means and the log shaped rotating structure. As the structure is rotating and moves towards the cutting means, these means need only be able to cut as far as the axis of rotation of the structure, since this combination of rotation and cutting will be sufficient to cut the structure into slices.

According to a preferred embodiment, the log shape structure is supported on a conveyor belt and caused to rotate about its longitudinal axis. Also preferred, cutting of the structure into slices is effected by a set of cutting means having their cutting edges substantially perpendicular to the axis of rotation of the structure, and which may cut into the log shape structure at least as far as the axis of rotation

In case of rotary cutting means the tangent to the cutting edge should be perpendicular to this axis of rotation.

In a preferred embodiment, resulting in slices having little or no deformation resulting from cutting, the structure during cutting is supported by a generally concave curved moving supporting surface. This supporting surface may suitably be formed by one or more flexible belts, guided by suitably arranged guiding rollers.

This method has been found to be particularly suitable for cutting a soft, deformable log shaped structure of foodproduct such as dough into slices where it is desired to obtain slices of dough which are circular, uniform, and with the minimum possible deformation of the slice of dough. This method of slicing has been found to be especially suitable when used to produce slices of dough from a log-shaped roll of dough manufactured by rolling a sheet of dough into a log shape (as detailed in our co-pending application EP 319,221). The method has also been found to be an energy efficient way of cutting log-shaped items in general, since the combination of rotation of the log shaped item plus reciprocation of the cutting means means that the cutting means need only cut as far as the centre of the log shaped item. Rotation ensures that the log shaped item is cut through in its entirety, and this has proved to be an energy efficient way of producing slices from such items, since the rotation of the log-shaped item means that the cutting means are less susceptible to "pinching" during cutting.

Whereas "series of cutting means" has previously been referred to, this will of course be taken to include only one cutting means. The cutting means can be mounted from a single mounting that runs parallel with the axis of rotation of the log-shaped structure, although it has been found preferable to "stagger" the cutting means such that periodic cutting means cut the log-shaped structure simultaneously, and it is only after the first set of cutting means has entered the structure that the second set of cutting means start to cut the structure. The cutting means may be "staggered" into two or more sets.

Preferably, the cutting means have a very narrow thickness, i.e. less than 0.5 mm, more preferably 0.2 - 0.3 mm, to provide minimum resistance when cutting the log. When cutting sticky substances such as cylinders of dough, especially where relatively thin (i.e. about 20 mm thickness) slices are required, it is desirable for the cutting means to have a relatively narrow width, preferably less than 5 mm, more preferably less than 3 mm. Conveniently, the cutting means may be coated with a non-adhesive coating, e.g. 'Teflon' (registered trade mark), again to minimise the resistance between the cutting means and slices during cutting and also when slicing dough logs to minimise the build up of dough on the cutting means. Usual cutting means are blades, wires and non serrated blades. Band saws may be used as an alternative to reciprocating blades.

If the slices are produced from a dough cylinder, then when cut into slices these slices may tend to adhere to each other because of the sticky nature of some doughs. If this is so, it has been found preferable to separate these slices by a device which grips the slice adjacent to end slice, contacts the exposed end slice, generates a slight vacuum between the slice and the device to draw them together, and simultaneously twists the slice whilst pulling it clear of the rest of the dough cylinder, thereby producing a clean separation between slices.

The invention will now be described by way of example only with reference to the accompanying drawings, in which:

Figure 1 shows a perspective view of an apparatus according to the invention.

Figure 2 shows a section view XX through the non-cutting part of the apparatus of Figure 1.

Figure 3 shows a perspective view of a soft deformable log shaped structure cut by the apparatus of the invention.

Figure 4 shows a perspective view of a device for receiving the cut log-shaped structure of Figure 3.

Figure 5 shows a plan view of the device of Figure 4.

Figure 6 shows the device of Figure 4 holding a sliced log-shaped structure.

Figure 7 shows a perspective view of a device for separating slices of a sliced log-shaped structure.

Figure 8 shows a perspective view of part of the device of Figure 7.

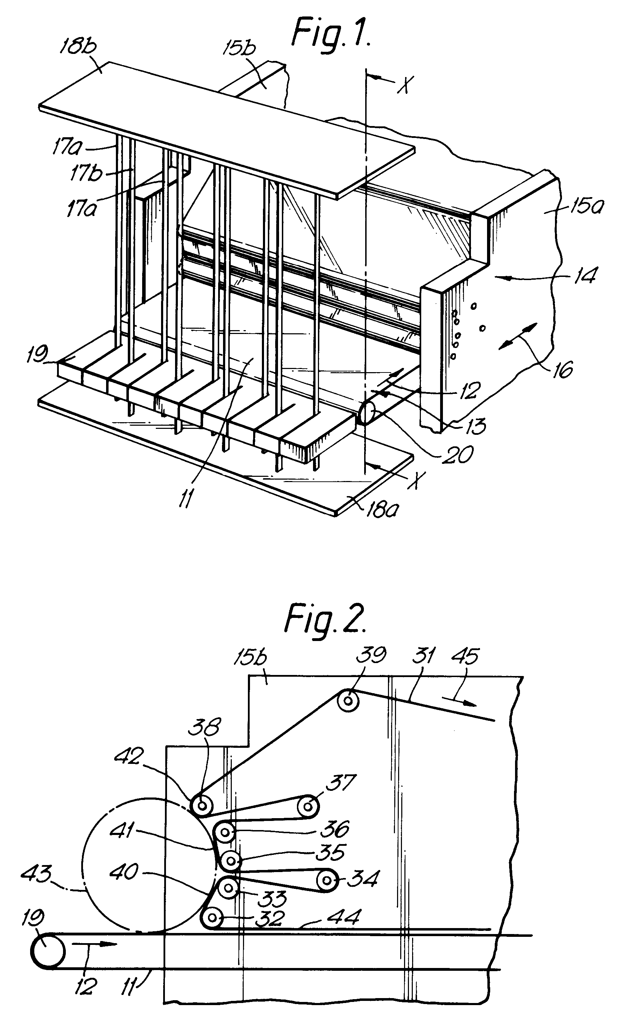

The apparatus of Figure 1 comprises a conveyor belt 11 which, in use, would move in the direction of arrow 12.

Conveyor belt 11 is used to support a log of deformable material, (not shown for clarity) and in practice belt 11 also acts to urge the log, which would be supported in the general area 13, towards the rotation causing means 14. Rotation causing means 14 essentially comprises two side frames 15a, 15b, which are located in fixed relation to each other on either side of belt 11. Side frames 15a, 15b may be constructed of steel, and support between them a series of rollers and a belt which act to cause a log located at 13 to rotate in an anticlockwise direction. Rotation causing means 14, which can move in either direction along belt 11 as shown by arrow 16, will be further described later.

The cutting means comprises a plurality of blades 17a, 17b, which are suspended between supports 18a, 18b. As can be seen, the plurality of blades 17a, 17b, are "staggered" into pairs (17a blades and 17b blades), and each blade passes through fingerboard 19.

Blades 17a, 17b, are each made of 'Teflon' (registered Trade mark) coated steel, and are serrated. The blades are 300 mm long, 3 mm wide, 0.25 mm thick, and are spaced 2 cm apart across the width of supports 18a, 18b. Supports 18a, 18b can be energised so as to cause blades 17a, etc to reciprocate along the axis between supports 18a, 18b, at a frequency of approximately 1200 cycles/minute, and an amptitude of 10 mm.

Conveyor 11 circulates at its end nearest the cutting apparatus around roller 20, located such that it is as close as possible to finger board 19. Blades 17a, etc are located as close as possible to roller 20, and certainly close enough such that the distance between them and the urging surface of the rotation causing means 14 on its closest approach is less than the radius of the log to be sliced. It is preferable that the closest approach possible between rotation causing means 14 and blades 17a, 17b be of the order of 2-3 mm. In practice roller 20 is also made as small as possible so as to facilitate as close an approach as possible between the horizontal surface of belt 11 and fingerboard 19.

Figure 2 shows a cross section XX through rotation causing device 14, which makes up one half of the rotation causing means along with conveyor belt 11. Note Figure 2 is only intended to show the rotation causing, non-cutting parts of rotation causing apparatus 14, and comprises a belt 31, driven by conventional means (not shown) and which passes between a series of spindles 32-39. Spindles 32-39 are positioned so as to provide surfaces 40, 41, 42 which can contact a log shaped structure supported on belt 11 (shown by dotted line 43), said surfaces 40-42 in use with the rotation of belt 11 to provide a log shaped structure situated at 13 with the maximum possible anticlockwise rotation force about the structure's central axis. Belt 31, in its approach 44 to spindle 32, is located as closely as possible to belt 11 to minimise the risk of part of the log shape structure jamming between spindle 32 and belt 11.

In use, a log shaped structure is placed at 13 on belt 11, and belt 11 is activated on such that its surface moves in the direction shown by arrow 12, causing a log at 13 to move towards surfaces 40-42. Rotation causing device 14 is switched on, causing its belt 31 to move in the direction shown by arrow 45. The result of these two belts 11, 31 being switched on is that a log on belt 11 is caused to move towards surfaces 40-42, and also to rotate in an anticlockwise direction on contact with surfaces 40-42, preferably at a rate of around 40 rpm.

Whilst the configuration of Figure 2 is preferred, in practice belt 31 may be removed from rotation causing apparatus 14, and spindles 32, 33, 35, 36 and 38 rubber coated and energised so as to cause rotation of a log at 43.

Rotation causing apparatus 14 is now caused to move slowly (so that the log is not pinched) towards blades 17a, 17b. The cutting apparatus is switched on, and blades 17a, 17b are already reciprocating in a direction perpendicular to the axis of rotation of the log. Apparatus 14 causes the rotating log to come into contact first with one set of blades 17a, and then the second set 17b which are set back from blades 17a. Over the space of 10 seconds or so, the log shaped structure is further urged by apparatus 14 such that blades 17a, 17b cut at least as far as the axis of rotation of the structure, thus ensuring that the structure is cut into a plurality of slices. Fingerboard 19 may be orientated appropriately, or may be energised, so as in any event to aid the passage of the sliced structure through the blades.

Once sliced, the log shaped structure may pass through the blades 17a, 17b to a point on the other side of the blades away from apparatus 14, where it may be collected by suitable means (not shown).

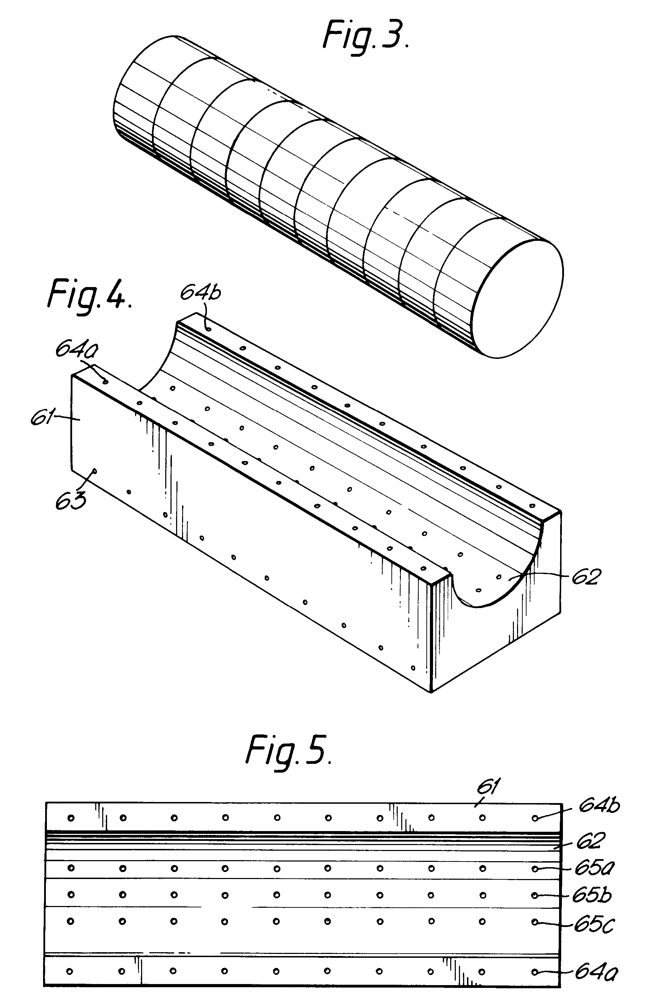

Figure 3 shows a perspective view of log cut by the devices of Figures 1 and 2.

It is not uncommon for soft, deformable log shaped structures of for example foodstuffs, of the type for which the above described apparatus is particularly suitable for slicing, to be very sticky. As a result, when cut, the slices of such a structure do not always readily separate, but may tend to stick together. An apparatus for separating the slices of such sliced structures is shown in Figures 4-8.

The device of Figure 4 comprises holder 61 having a generally semicircular channel 62 cast in it. Holder 61 is manufactured from plastics materials, and may conveniently be injection moulded. Channel 62 is capable of supporting a log shaped structure of material which has been transversely sliced, but wherein the slices have stuck together, such as previously described. Located at regular intervals along the sides and top edges of holder 61 are holes 63 and holes 64a, 64b. Holes 63 and 64a, 64b may be used as "indexing" holes, the function of which will be further described later.

Figure 5 shows a plan view of the apparatus in Figure 4. Also visible running along the middle of channel 62 and going right through holder 61 are 3 rows of holes 65a, b, c which allow physical access to a log sliced shaped structure sitting in channel 62 from outside holder 61.

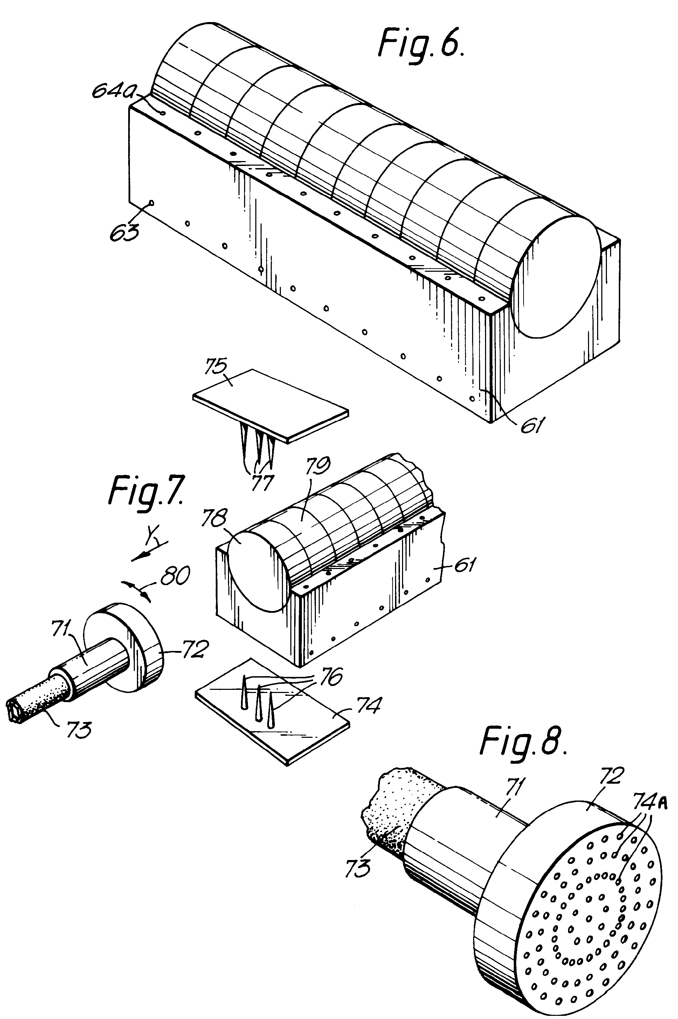

Figure 6 shows a sliced log shaped structure sitting in channel 62 of the holder 61 of Figures 4 and 5. Most preferably, the holes 63, 64a and 64b, and 65a, 65b and 65c will all be located on holder 61 in a series of "planes" which run transversely across the width of holder 61, with conveniently there being one "plane" of holes in holder 61 for each slice of material in the sliced, sticky structure. Conveniently, when the structure sits on holder 61, it is positioned such that the interface between two slices intersects the planes of holes, as shown in Figure 6.

Figure 7 shows the essential elements of an apparatus for separating adhering slices of a sticky log shaped structure sliced according to the invention. A sliced structure is shown mounted on a holder 61, which in turn is mounted on a frame (not shown) which both supports holder 61, and also has included moving means (of conventional type known in the art; the moving means does not comprise the invention) which causes holder 61 and separator 71 to move in stepwise fashion towards each other. Holes 63, 64a, 64b interact with the moving means, and facilitate the stepwise movement of holder 61 towards separator 71. Whilst in this embodiment it is the holder 61 that is moved stepwise towards stationary separator 71, it is equally contemplated that separator 71 could be caused to move towards stationary holder 61, or both separator 71 and holder 61 could be caused to move towards each other.

Separator 71 comprises a perforated head 72, conveniently manufactured from plastics materials, which is connected by tube 73 to a combine vacuum/compressed air source. The apparatus also comprises supports 74, 75, onto which are mounted spikes 76, 77. Supports 74, 75 and spikes 76, 77 may be manufactured from any convenient materials, for example metals or plastics.

Figure 8 further shows a perspective view of separator 71 from direction Y in Figure 7, showing a plurality of perforations 74A to be found on the front of head 72.

In use, by using a conventional electromechanical system which may conveniently be computer controlled, holder 61 and separator 71 are caused to move towards each other.

Conveniently, just before head 72 is caused to come into contact with face 78, by the electromechanical means mentioned previously, spikes 76, 77 are caused to engage slice 79, the slice adjacent the end slice of the log. In the process of engaging slice 79, it is preferable that spikes 77 engage slice 79 before spikes 76. Spikes 76 are able to engage slice 79 through holes 65a, b, c, located in holder 61. Slice 79 is therefore securely held.

Either before or when head 72 comes into contact with face 78 of the structure, the vacuum source is switched on such that there is a vacuum across perforations 74 of head 72. This vacuum must be sufficient to ensure that the force between face 78 and head 72 is greater than the sticking force between adjacent slices.

Then by the electromechanical means previously mentioned, the head 72, whilst still attached to face 78 by vacuum, is twisted in either of the directions indicated by arrow 80. The exact degree of twist is not crucial, but is conveniently of the order of 10-30°, preferably 20-30°. During this twisting motion, and preferably towards the end of the twisting motion, the head 72 is caused to draw away from the log shaped structure on holder 61, thereby pulling away with it the end slice.

Separator 71 may then be manoeuvred to another position where by switching off the vacuum and, applying a slight positive air pressure the slice previously removed may be deposited. Once spikes 76, 77 are disengaged from slice 79, the apparatus is then ready to commence another cycle - ie holder 61 is moved stepwise towards separator 71, spikes 76, 77 engage the slice adjacent the end slice, head 72 engages the end slice with a vacuum generated through head 72, head 72 is caused to twist and withdraw, and so on.

## Claims

1. Apparatus for slicing a log shaped structure (43) having a centre line, the apparatus comprising means (14) for causing the structure to rotate about its centre line, a series of cutting means (17) having their cutting edges transverse to the centre line of the rotating structure, and means for causing relative movement between the structure and the cutting means whereby the cutting means cuts into the structure being rotated, and the means for causing rotation define a generally concave curved supporting surface (40, 41, 42), characterized in that said surface is formed by at least one flexible belt (31) guided about suitably arranged guide rollers (32-39).

2. Apparatus according to claim 1, wherein the cutting means (17) are reciprocating.

3. Apparatus according to claim 1, or 2, wherein the cutting means (17) have a thickness of at most 0.5 mm, more preferably of from 0.2 to 0.3 mm.

4. Apparatus according to claim 1-3, wherein the cutting means (17) are coated with a non-adhesive coating.

5. Apparatus according to claim 1, wherein the means for causing relative movement comprise a supporting element which is movable to and from the cutting means and which is provided with a generally concave curved supported surface which is movable in the direction of the curvature.

6. Method of cutting a log-shaped structure (43) into slices using the apparatus according to claim 1, wherein the structure is supported on a conveyor belt (11) moved towards a series of cutting means (17) having their cutting edges substantially perpendicular to the axis of rotation of the structure, whereby the structure during cutting is caused to rotate about its longitudinal axis and is supported by a generally concave curved moving supporting surface (40, 41, 42).

## Patentansprüche

1. Vorrichtung zum Schneiden einer stangenförmigen Struktur (43) mit einer Mittenlinie, wobei die Vorrichtung Mittel (14) zum Bewirken einer Drehung der Struktur um ihre Mittenlinie, eine Reihe von Schneidmitteln (17) mit Schneiden, die quer zur Mittenlinie der sich drehenden Struktur verlaufen, und Mittel zum Bewirken einer Relativbewegung zwischen der Struktur und dem Schneidmittel umfaßt, wodurch das Schneidmittel in die Struktur, die gedreht wird, schneidet und die Mittel zum Bewirken der Drehung eine allgemein konkav gekrümmte Stützfläche (40, 41, 42) definieren, dadurch gekennzeichnet, daß die genannte Fläche durch zumindest einen flexiblen Riemen (31) gebildet wird, der über geeignet angeordnete Führungsrollen (32 bis 39) geführt ist.

2. Vorrichtung nach Anspruch 1, dadurch gekennzeichnet, daß die Schneidmittel (17) hin- und hergehend ausgebildet sind.

3. Vorrichtung nach Anspruch 1 oder 2, dadurch gekennzeichnet, daß die Schneidmittel (17) eine Dicke von höchstens 0,5 mm, bevorzugter 0,2 bis 0,3 mm aufweisen.

4. Vorrichtung nach Anspruch 1 bis 3, dadurch gekennzeichnet, daß die Schneidmittel (17) mit einer nicht-haftenden Beschichtung überzogen sind.

5. Vorrichtung nach Anspruch 1, bei welcher die Mittel zum Bewirken einer Relativbewegung ein Stützelement umfassen, das zum Schneidmittel hin und von diesem weg bewegbar ist und das mit einer allgemein konkav gekrümmten getragenen Fläche versehen ist, die in die Richtung der Krümmung bewegbar ist.

6. Verfahren zum Schneiden einer stangenförmigen Struktur (43) in Scheiben unter Verwendung der Vorrichtung nach Anspruch 1, bei welchem die Struktur auf einem Förderband (11) getragen wird, das zu einer Reihe von Schneidmitteln (17) hin bewegt wird, die Schneiden aufweisen, die im wesentlichen senkrecht zur Drehachse der Struktur verlaufen, wodurch die Struktur während des Schneidens veranlaßt wird, sich um ihre Längsachse zu drehen, und durch eine allgemein konkav gekrümmte, sich bewegende Stützfläche (40, 41, 42) gestützt wird.

## Revendications

1. Appareil destiné à découper en tranches une structure (43) en forme de rondin ayant un axe central, cet appareil comportant des moyens (14) destinés à amener la structure à tourner autour de son axe central, une série de moyens (17) de découpage ayant leurs bords de coupe disposés transversalement à l'axe central de la structure en rotation, et des moyens destinés à provoquer un déplacement relatif entre la structure et les moyens de découpage de manière que les moyens de découpage viennent entamer leur découpage dans la structure en train de tourner et les moyens destinés à provoquer une rotation définissent une surface de support courbe généralement concave (40, 41, 42), caractérisée en ce que ladite surface est constituée par au moins une courroie flexible (31) guidée autour de rouleaux (32 - 39) de guidage agencés convenablement.

2. Appareil conforme à la revendication 1, dans lequel les moyens (17) de découpage sont animés d'un mouvement de va-et-vient.

3. Appareil conforme à la revendication 1, ou à la revendication 2, dans lequel les moyens (17) de découpage ont une épaisseur d'au plus 0,5 mm, de manière plus préférentielle d'une valeur comprise entre 0,2 et 0,3 mm.

4. Appareil conforme aux revendications 1 - 3, dans lequel les moyens (17) de découpage sont revêtus d'un revêtement non adhésif.

5. Appareil conforme à la revendication 1, dans lequel les moyens destinés à provoquer un déplacement relatif comportent un élément de support qui est susceptible de se déplacer en se rapprochant ou en s'éloignant des moyens de découpage et qui est pourvu d'une surface de support courbe et généralement concave qui est mobile dans la direction de la courbure.

6. Procédé de découpage en tranches d'une structure (43) en forme de rondin utilisant l'appareil conforme à la revendication 1, dans lequel la structure est portée par une courroie (11) de convoyeur, déplacée vers une série de moyens (17) de découpage ayant leurs bords de coupe sensiblement perpendiculaires à l'axe de rotation de la structure, si bien que pendant le découpage la structure est amenée à tourner autour de son axe longitudinal et est supportée par une surface de support courbe et généralement concave (40, 41, 42), en déplacement.
